# EUROPEAN PATENT APPLICATION

(11) **EP 3 075 429 A1**
(43) Date of publication of application: **05.10.2016**
(21) Application number: 14866184.6
(22) Date of filing: 12.11.2014
(51) Int. Cl.: B01D 29/62, B01D 29/23, B01D 29/96

(54) **FILTER DEVICE**

(30) Priority: 29.11.2013 KR 20130147642
(71) Applicant: Hyundai Heavy Industries Co., Ltd., Ulsan 682-792 (KR)
(72) Inventor: JANG, Won Taek, Ulsan 682-816 (KR); CHUNG, Kyung Nam, Ulsan 682-807 (KR); KIM, Yang Gyu, Ulsan 681-800 (KR); JEONG, Gil Ju, Yangsan-si Gyeongsangnam-do 626-815 (KR); RHEE, Tae Jin, Yongin-si Gyeonggi-do 448-537 (KR); HAN, Ki Hoon, Ulsan 682-761 (KR); YOON, Sung-Hwan, Busan 609-853 (KR); LEE, Hyun Woo, Busan 609-841 (KR); OH, Seunghye, Seoul 153-842 (KR)
(74) Representative: Awapatent AB
(86) International application number: PCT/KR2014/010852
(87) International publication number: WO 2015/080405

(57) **Abstract**

Disclosed is a filter device. The filter device includes a filter housing including an inflow port through which water flows in and an outflow port through which the water flowed in through the inflow port flows out, a plurality of filter members installed in the filter housing, an inflow unit installed in the filter housing and provided in each of both sides of each of the plurality of filter members for the water flowed in from the inflow port to be supplied to a plurality of openings respectively provided in the both sides of each of the plurality of filter members, and a backwashing unit coupled to both sides of at least one of the plurality of filter members for foreign substances filtered out by the plurality of filter members to be backwashed from the plurality of filter members. The plurality of filter members each has a hollow form to filter the water flowed in from the inflow port.

## Description

### [Technical Field]

The present invention relates to a filter device, and more particularly, to a filter device for backwashing a filter member which is used in a process of filtering out foreign substances, microbes, and/or the like included in seawater or fresh water.

### [Background Art]

Generally, a ballast tank for storing ballast water is installed in ships, for adjusting the balance and sea gauge of each of the ships.

Freight is loaded on a ship, and when the front-back balance and/or left-right balance of the ship are/is not made, the ship may be balanced by supplying the ballast water to the ballast tank or discharging the ballast water from the ballast tank. Also, ships are generally designed to economically and stably sail when freight is loaded thereon. Therefore, a condition similar to a freight-loaded state is provided to a ship by adjusting the amount of ballast water stored in the ballast tank according to the amount of loaded freight, thereby enabling the ship to stably sail.

Here, the ballast water stored in the ballast tank is adjusted by supplying or discharging seawater/fresh water, located near the ship, to or from the ballast tank with a pump. However, foreign substances (i.e., inorganic substances such as pebbles, sand, and mud, creatures such as fishes and shells, shellfish, and plankton, and organic substances) in a ship-located area can flow into the ballast tank in a process of supplying the ballast water to the ballast tank. Therefore, when the ship sails at a long distance, the foreign substances are precipitated and stuck, causing a reduction in a function of the ballast tank. Also, when the ballast water is discharged from the ballast tank while freight is being loaded on the ship, creatures and organic substances included in the ballast water are discharged together, and for this reason, the surrounding ecosystem is changed, causing an adverse effect on an ambient environment.

Therefore, international maritime organization (IMO) has introduced the ballast water purification rule in 2004, for preventing an ecosystem from being damaged due to ballast water. Accordingly, ships which sail at a long distance should be essentially equipped with a device for removing foreign substances such as creatures or organic substances included in ballast water. Also, a large amount of ballast water is used in large ships such as oil tankers, containers, and LNG carriers which sail at a long distance.

Therefore, it is required to develop an efficient filter device for quickly filtering out a large amount of seawater or fresh water which is used as ballast water for large ships. Also, it is required to develop a filter device that quickly backwashes a filter member while filtering out foreign substances such as microbes included in seawater or fresh water, thereby enhancing the filtering efficiency of the filter member.

### [Disclosure]

### [Technical Problem]

Therefore, the present invention has been made in view of the above problems, and it is an object of the present invention to provide a filter device for enhancing the performance of filtering out foreign substances included in seawater or fresh water.

It is another object of the present invention to provide a filter device for enhancing the efficiency of backwashing a filter member which is used in a process of filtering out microbes and/or the like included in seawater or fresh water.

### [Technical Solution]

To accomplish the above and other objects, the present invention may include the following configurations.

In accordance with one aspect of the present invention, a filter device includes: a filter housing including an inflow port, through which water flows in, and an outflow port through which the water flowed in through the inflow port flows out; a plurality of filter members installed in the filter housing, the plurality of filter members each having a hollow form to filter the water flowed in from the inflow port; an inflow unit installed in the filter housing and provided in each of both sides of each of the plurality of filter members for the water, flowed in from the inflow port, to be supplied to a plurality of openings respectively provided in the both sides of each of the plurality of filter members; and a backwashing unit coupled to both sides of at least one of the plurality of filter members for foreign substances, filtered out by the plurality of filter members, to be backwashed from the plurality of filter members.

### [Advantageous Effect]

As is apparent from the above description, the present invention has the following effects.

The present invention enhances the performance of filtering out foreign substances included in seawater or fresh water.

Moreover, the present invention enhances the efficiency of backwashing a filter member which is used in a process of filtering out microbes and/or the like included in seawater or fresh water.

### [Description of Drawings]

FIG. 1 is a schematic view of a filter device according to a first embodiment of the present invention.
FIG. 2 is a cross-sectional view taken along line A-A of the filter device of FIG. 1.
FIG. 3 is a schematic view of a filter member of the filter device of FIG. 1.
FIG. 4 is a schematic view illustrating a filtering process and a backwashing process of the filter device of FIG. 1.
FIG. 5 is an enlarged view illustrating a filtering process of the filter member of the filter device according to the first embodiment of the present invention.
FIG. 6 is an enlarged view illustrating a backwashing process of the filter member of the filter device according to the first embodiment of the present invention.
FIG. 7 is a schematic view of a filter member of a filter device according to a second embodiment of the present invention.
FIG. 8 is an enlarged view illustrating a filtering process of the filter member of the filter device according to the second embodiment of the present invention.
FIG. 9 is an enlarged view illustrating a backwashing process of the filter member of the filter device according to the second embodiment of the present invention.
FIG. 10 is a schematic view of a filter member of a filter device according to a third embodiment of the present invention.
FIG. 11 is an enlarged view illustrating a filtering process of the filter member of the filter device according to the third embodiment of the present invention.
FIG. 12 is an enlarged view illustrating a backwashing process of the filter member of the filter device according to the third embodiment of the present invention.
FIG. 13 is an enlarged view illustrating a backwashing process of a filter member of a filter device according to a fourth embodiment of the present invention.

### [Mode for Invention]

Hereinafter, embodiments of a filter device according to the present invention will be described in detail with reference to the accompanying drawings.

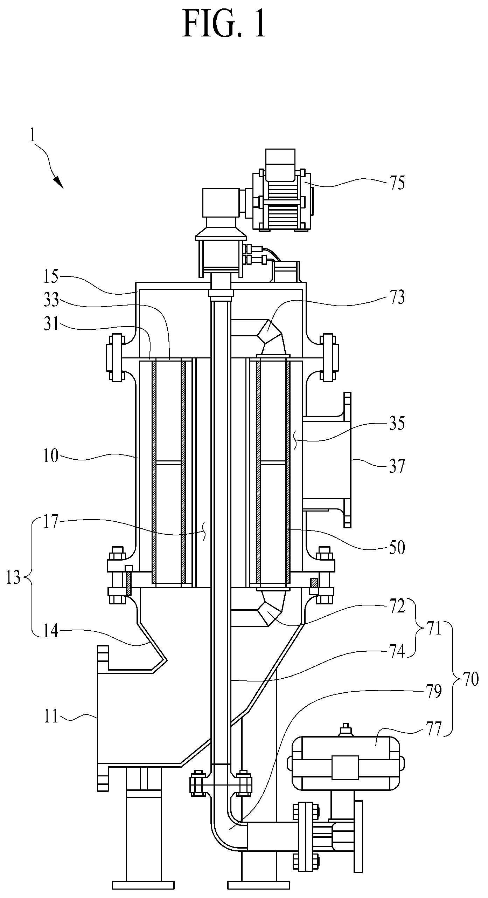

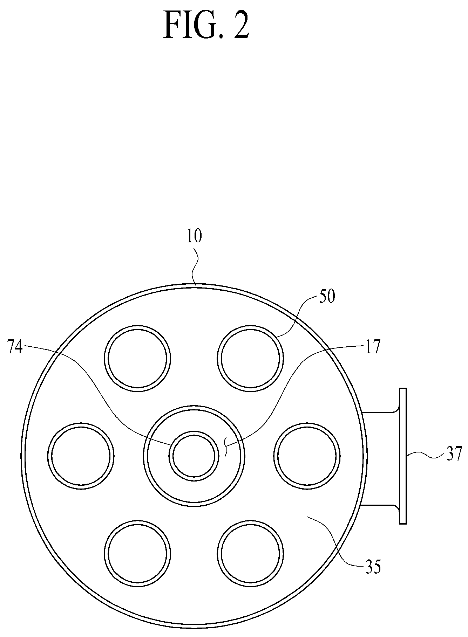

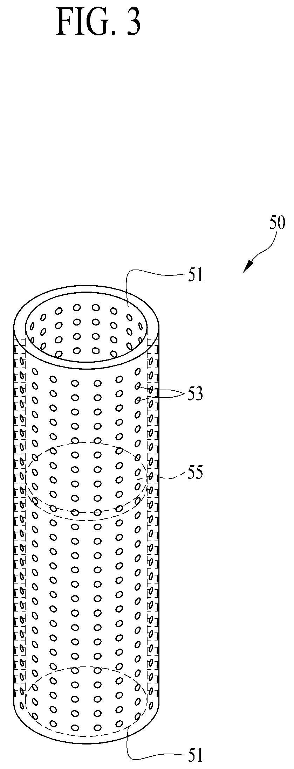

As illustrated in FIGS. 1 to 3, a filter device 1 according to a first embodiment of the present invention may be a device for filtering out foreign substances such as inorganic substances, microbes, and/or the like included in water such as seawater or fresh water which is supplied to a ballast tank as ballast water for adjusting the balance and sea gauge of a ship. However, the present invention is not limited to ships, and the filter device 1 according to the present invention may be variously applied to other devices which need to filter out foreign substances such as inorganic substances, microbes, and/or the like included in water such as seawater or fresh water flowing into the ballast tank.

The filter device 1 according to the first embodiment of the present invention may include a filter housing 10 that includes an inflow port 11 through which water flows in and an outflow port 37 through which the water flowed in through the inflow port 11 flows out, a plurality of filter members 50 that are installed in the filter housing 10 and are each provided in a hollow form to filter the water flowed in through the inflow port 11, an inflow unit 13 that is installed in the filter housing 10 and is provided in each of both sides of the filter member 50 in order for the water, flowed in through the inflow port 11, to be supplied to an opening 51 provided in each of the both sides of the filter member 50, and a backwashing unit 70 that includes a coupling pipe 71 coupled to both sides of at least one of the plurality of filter members 50 in order for foreign substances, filtered out by the filter members 50, to be backwashed from the filter members 50.

The filter housing 10 may configure an outer appearance of the filter device 1. The filter housing 10, for example, may be installed in an inlet area into which water of a ballast tank (not shown) of a ship flows, and the water may be pumped by a pump (not shown) or the like installed in the ballast tank (not shown) to flow into the filter housing 10. A filter mounting part 31 in which the filter member 50 is accommodated and equipped may be provided in the filter housing 10, for filtering the water flowed in through the inflow port 11.

The inflow port 11 may be provided in a lower area of the filter housing 10 for example. However, the inflow port 11 is not limited thereto and may be provided in various areas such as an upper area and the like of the filter housing 10 in order for water to flow in. Also, for example, the outflow port 37 may be provided in a side of the filter housing 10 where the filter mounting part 31 is provided. However, the outflow port 37 is not limited thereto and may be provided in various areas such as a lower area and the like of the filter housing 10 in order for water to flow out.

For example, the filter members 50 may be installed in a vertical direction in the filter housing 10. In this case, the inflow unit 13 may include a lower inflow part 14 provided under each of the filter members 50 and an upper inflow part 15 provided on each of the filter members 50. Also, the inflow unit 13 may include an inflow path 17 that is provided in a center area of the filter housing 10 and communicates the lower inflow part 14 with the upper inflow part 15. However, the present invention is not limited thereto, and the filter members 50 may be installed in a horizontal direction in the filter housing 10. In this case, the inflow unit 13 may be provided in each of both sides of the filter member 50.

The lower inflow part 14 may be provided in a lower area of each of the filter members 50 in order for water, flowing in through the inflow port 11, to be supplied through the opening 51 provided in a lower portion of each of the filter members 50. The upper inflow part 15 may be provided in an upper area of each of the filter members 50 so that the water flowing in through the inflow port 11 flows in through the lower inflow part 14 and the inflow path 17 and is supplied through the opening 51 provided in an upper portion of each of the filter members 50.

The inflow path 17, for example, may be through provided in a center area of the filter mounting part 31 provided in a cylindrical shape and may supply water, flowing into the lower inflow part 14, to the upper inflow part 15. However, the inflow path 17 is not limited to the center area of the filter housing 10 and may be provided in another area of the filter housing 10 in order for the water, flowing into the lower inflow part 14, to be supplied to the upper inflow part 15.

The filter mounting part 31, for example, may be provided in a cylindrical shape having a follow form in order for the plurality of filter members 50 to be accommodated and installed therein. However, the filter mounting part 31 may be provided in various shapes such as a polygonal pillar having a hollow form. A plurality of through flow paths 33 may be provided in correspondence with the openings 51 of the filter members 50 which are installed in the vertical direction in a lower portion and an upper portion of the filter mounting part 31. For example, six filter members 50 may be mounted at an equal angle on the filter mounting part 31. However, the filter mounting part 31 is not limited thereto, and five or less filter members 50 or seven or more filter members 50 may be mounted on the filter mounting part 31. The lower inflow part 14 may be disposed under the filter mounting part 31, and the upper inflow part 15 may be disposed on the filter mounting part 31. Also, the inflow path 17 may be provided in the center area of the filter mounting part 31 having a hollow shape. An outflow part 35, accommodating water which flows into the filter member 50 through flow path 33 and is filtered through a filter hole 53 of the filter member 50, may be provided in the filter mounting part 31. The outflow port 37 may be provided in one side of the filter mounting part 31 in order for the filtered water, accommodated in the outflow part 35, to be discharged in a direction toward the ballast tank (not shown).

The through flow path 33, for example, may be provided as six at an equal angle in each of the lower portion and upper portion of the filter mounting part 31 in correspondence with the openings 51 of six filter members 50. Therefore, in a filtering process, water may flow in through the opening 51 of the filter member 50 from the upper inflow part 15 and the lower inflow part 14 via the through flow path 33 and may be discharged to the outflow part 35 through the filter hole 53 of the filter member 50.

The outflow part 35 may be an element that accommodates water filtered through the filter hole 53 of the filter member 50 before the filtered water is discharged, and may be provided outside the filter member 50 in the filter mounting part 31.

The filter member 50 may be equipped in the filter mounting part 31 and may be provided in a hollow form to filter water which flows from both sides into a center. For example, the filter member 50 may be provided in a pipe shape, and the opening 51 may be provided in each of both sides of the filter member 50 in order for water to flow in or out. A plurality of the filter holes 53 may be provided in the filter member 50 to filter water flowing in through the opening 51. For example, the filter hole 53 of the filter member 50 may be provided to filter out a foreign substance a which is included in water flowing in and has a size of 45 µm to 50 µm. However, the filter hole 53 of the filter member 50 is not limited thereto and may be provided to filter out the foreign substance a having a size of less than 45 µm depending on the kind or state of water flowing in and the field to which the filter device 1 according to the present invention is applied. Therefore, water flowing in through the opening 51 of the filter member 50 may pass through the filter hole 53 to filter out foreign substances.

The filter device 1 according to the first embodiment of the present invention may further include a division member 55 that is provided in the filter member 50 to divide and filter water supplied to the opening 51 of the filter member 50 in a filtering process of the filter member 50 and to divide and backwash the filter member 50 in a backwashing process of the filter member 50.

The division member 55 may be equipped in the filter member 50 having a hollow form, may divide and filter water which flows in through each of the openings 51, provided in both sides of the filter member 50, from the upper inflow part 15 and the lower inflow part 14, and may divide and backwash the filter member 50 in a backwashing process performed by the backwashing unit 70. Therefore, in the filtering process, when there is only the lower inflow part 14, filtering may be much performed in a lower area of the filter member 50 adjacent to the lower inflow part 14, and a lot of the foreign substances a are caught in the lower area of the filter member 50 adjacent to the lower inflow part 14, causing a reduction in filtering efficiency. However, water may flow in from the both sides of the filter member 50 through the lower inflow part 14 and the upper inflow part 15, thereby enhancing the filtering efficiency. Also, since the division member 55 is further installed, the filter member 50 may separate and filter water flowing in from the lower inflow part 14 and water flowing in from the upper inflow part 15, thereby further enhancing the filtering efficiency.

The backwashing unit 70 may include the coupling pipe 71 that is rotatably provided to be coupled to both sides of at least one of the plurality of filter members 50, a coupling pipe driver 75 that rotates the coupling pipe 71 in order for the coupling pipe 71 to be coupled to the at least one of the plurality of filter members 50, and a discharging pipe 79 that communicates with the coupling pipe 71 in order for the foreign substance a filtered out by the filter member 50 to be discharged through the coupling pipe 71. Also, the backwashing unit 70 may include a backwashing valve 77 which is installed in the discharging pipe 79 to open or close the discharging pipe 79.

The coupling pipe 71, for example, may include a lower coupling pipe 72 that is provided in the lower inflow part 14 and is coupled to a lower side of the filter member 50, an upper coupling pipe 73 that is provided in the upper inflow part 15 and is coupled to an upper side of the filter member 50, and a center coupling pipe 74 that is provided in the inflow path 17 and couples the lower coupling pipe 72 to the upper coupling pipe 73.

The lower coupling pipe 72, for example, may be rotatably provided to be selectively coupled to one of the plurality of through flow paths 33 provided in a lower portion of the filter mounting part 31. Therefore, in a backwashing process, the foreign substances an accumulated in the filter member 50 communicating with the lower coupling pipe 72 may be discharged through the lower coupling pipe 72.

The upper coupling pipe 73, for example, may be rotatably provided to be selectively coupled to one of the plurality of through flow paths 33 provided in an upper portion of the filter mounting part 31. Therefore, in a backwashing process, the foreign substances a accumulated in the filter member 50 communicating with the upper coupling pipe 73 may be discharged through the upper coupling pipe 73.

The center coupling pipe 74, for example, may be provided in a center area of the filter mounting part 31 having a hollow form to couple the upper coupling pipe 73 to the lower coupling pipe 72, and the discharging pipe 79 may be coupled to a lower side thereof. That is, for example, the center coupling pipe 74 may be installed in the inflow path 17 provided in the center area of the filter mounting part 31. Therefore, the foreign substance a transported through the upper coupling pipe 73 and the lower coupling pipe 72 may be discharged to the discharging pipe 79 through the center coupling pipe 74.

The coupling pipe driver 75, for example, may be provided in order for the center coupling pipe 74, the upper coupling pipe 73, and the lower coupling pipe 72 to pivot as one body. The coupling pipe driver 75, for example, may be provided as a motor or the like in order for the center coupling pipe 74, the upper coupling pipe 73, and the lower coupling pipe 72 to pivot as one body and may be installed over the filter housing 10. However, the coupling pipe driver 75 is not limited thereto and may be installed at various positions such as a side under the filter housing 10, etc. Also, the coupling pipe driver 75 may be driven to couple the upper coupling pipe 73 and the lower coupling pipe 72 to the filter member 50, in which a lot of the foreign substances a are caught, among the plurality of filter members 50. In this case, in a method of determining the filter member 50 in which a lot of the foreign substances a are caught, a pressure sensor (not shown) may be equipped in each of the plurality of filter members 50, and by measuring an internal pressure of each of the filter members 50, the filter member 50 where the measured pressure is high may be determined as a filter member in which a lot of the foreign substances a are caught. In this manner, if the filter member 50 in which a lot of the foreign substances a are caught is determined, the coupling pipe driver 75 may be controlled to couple the determined filter member 50 to the upper coupling pipe 73 and the lower coupling pipe 72.

The discharging pipe 79, for example, may be provided under the filter housing 10 to discharge the foreign substance a, transported through the center coupling pipe 74, to the outside.

The backwashing valve 77, for example, may be equipped in a discharging pipe 79 to open or close the discharging pipe 79. However, the backwashing valve 77 may be mounted between a coupling pipe 71 and the discharging pipe 79 to open or close the discharging pipe 79. In the filter device 1 according to the present invention, a backwashing process may be performed simultaneously with a filtering process for example. That is, the upper coupling pipe 73 and the lower coupling pipe 72 may be coupled to one of the plurality of filter members 50 by the coupling pipe driver 75. Also, water may be supplied to the filter housing 10 through the inflow port 11 and may be fully filled in the filter housing 10, causing an increase in pressure. At this time, when the backwashing valve 77 is opened, a pressure of the discharging pipe 79 may become atmospheric pressure, and an internal pressure of the filter housing 10 may be high. Therefore, the water may flow backward from the outflow part 35 of the filter housing 10 to the filter hole 53 of the filter member 50 coupled to the upper coupling pipe 73 and the lower coupling pipe 72, and thus, a backwashing phenomenon where the foreign substance a is washed and desorbed may occur. The desorbed foreign substance a may be discharged to the discharging pipe 79 through the upper coupling pipe 73, the lower coupling pipe 72, and the center coupling pipe 74 along with the water. Also, when a measured internal pressure value of each of a plurality of the filter members 50 is less than a predetermined value, it is determined that a lot of the foreign substances a are caught in the filter member 50, and thus, the backwashing valve 77 may be closed. In this manner, when the backwashing valve 77 is closed, the backwashing process may not be performed for the filter member 50 coupled to the upper coupling pipe 73 and the lower coupling pipe 72, and only the filtering process may be performed for the other filter members 50. Therefore, when there is only the lower coupling pipe 72 in the backwashing process, backwashing may be much performed in a lower area of the filter member 50 adjacent to the lower coupling pipe 72, and thus, the foreign substance a in the lower area of the filter member 50 adjacent to the lower coupling pipe 72 may be washed well, but the backwashing efficiency of the foreign substance a in an upper area instead of the lower area is reduced. However, the water may be discharged to both sides of the filter member 50 though the lower coupling pipe 72 and the upper coupling pipe 73, and thus, the foreign substances a in an area adjacent to the upper coupling pipe 73 as well as the lower coupling pipe 72 may be washed well, thereby enhancing backwashing efficiency. Also, since the filter device 1 according to the present invention further includes the division member 55, the water discharged to both sides of the filter member 50 though the lower coupling pipe 72 and the upper coupling pipe 73 may be divided, thereby further enhancing backwashing efficiency.

The division member 55, for example, may be installed at a position higher than that of a middle portion of the filter member 50 which is installed in the vertical direction. For example, the division member 55 may be installed at a position corresponding to approximately three-fifth to four-fifth of a length of the filter member 50. However, the division member 55 may be installed may be installed at a position corresponding to approximately one-half to three-fifth of the length or four-fifth or more of the filter member 50, based on the length of the filter member 50 or a diameter of the opening 51. The reason that the filter member 55 is installed at a position higher than that of the middle portion of the filter member 50 is for more effectively filtering inflow water because an inflow pressure of water flowing from the upper inflow part 15 into the filter member 50 is weaker than that of water flowing from the lower inflow part 14 into the filter member 50 due to an influence of gravity, and thus, the water flowing from the lower inflow part 14 into the filter member 50 is relatively more. Also, since the amount of water discharged to the lower coupling pipe 72 is more than that of water discharged to the upper coupling pipe 73 due to an influence of gravity even in the backwashing process, the division member 55 may be installed at a position higher than that of the middle portion of the filter member 50, thereby further enhancing backwashing efficiency.

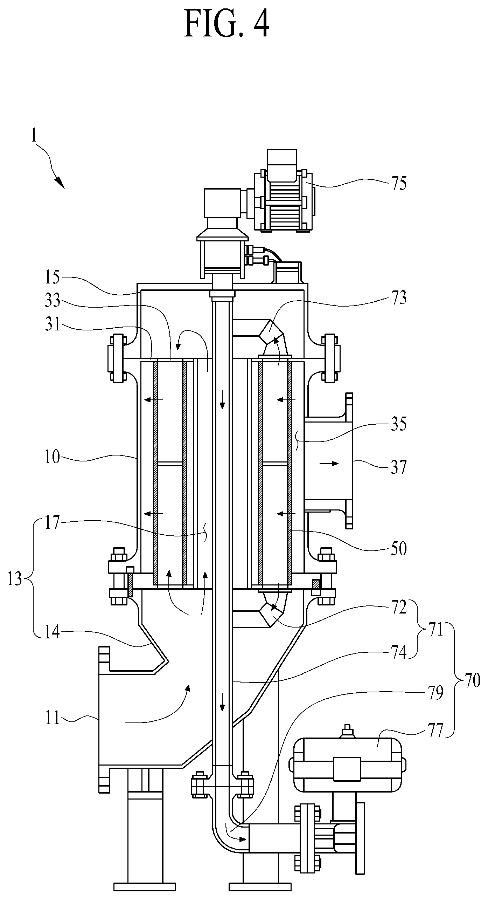

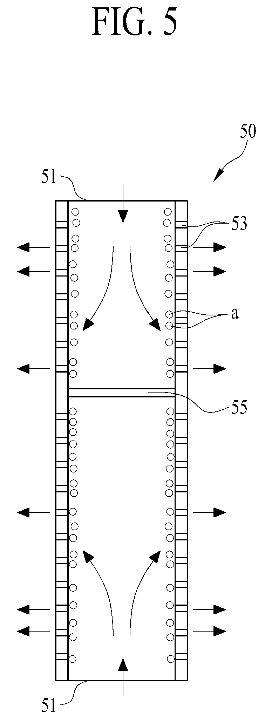

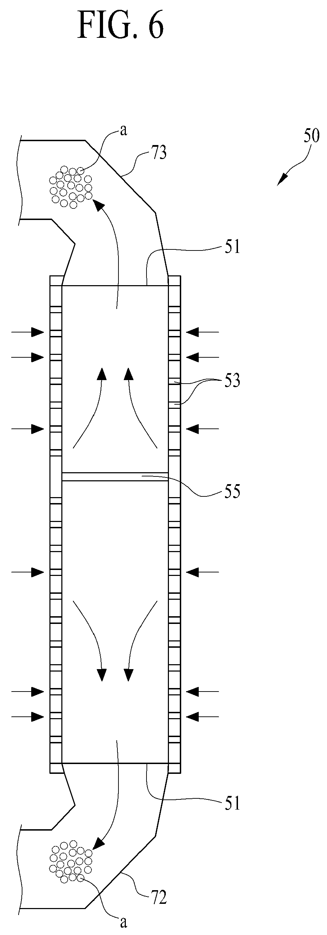

The filtering process and backwashing process of the filter device 1 according to the first embodiment of the present invention will be described with reference to FIGS. 4 to 6.

To first describe the filtering process, water may be supplied to the filter housing 10 through the inflow port 11. Then, the supplied water may be transported to the lower inflow part 14, the inflow path 17, and the upper inflow part 15 and may be supplied to the plurality of filter members 50 through the through flow path 33 of the filter mounting part 31. The water supplied to the filter member 50 may pass through the filter hole 53 of the filter member 50 to thereby be filtered, and the filtered water may be discharged to the outflow port 37 through outflow part 35.

Therefore, since water is supplied to the openings 51 of the both sides of the filter member 50 through the lower inflow part 14 and the upper inflow part 15 in the filtering process, the filtering efficiency of the filter device 1 according to the first embodiment of the present invention is further enhanced than a case where only the lower inflow part 14 is provided. Also, when the division member 55 is provided in the filter member 50, water flowing in from the lower inflow part 14 and water flowing in from the upper inflow part 15 may be separately filtered, and thus, the filtering efficiency is further enhanced than a case where the division member 55 is not provided. Also, the division member 55 may be installed at a position higher than that of the middle portion of the filter member 50, thereby further enhancing the filtering efficiency in consideration of an influence of gravity.

To describe the backwashing process, in a state where the backwashing valve 77 is closed, water may flow in through the inflow port 11 and may be fully filled into the filter housing 10 to increase pressure. Also, the coupling pipe driver 75 may be driven to couple the upper coupling pipe 73 and the lower coupling pipe 72 to the filter member 50, in which a lot of the foreign substances a are caught, among the plurality of filter members 50. Then, when the backwashing valve 77 is opened, a pressure of the discharging pipe 79 may become atmospheric pressure, and thus, the water may flow backward from the outflow part 35 of the filter housing 10 to the filter hole 53 of the filter member 50 coupled to the upper coupling pipe 73 and the lower coupling pipe 72 to backwash the foreign substance a. The washed foreign substance a may be discharged to the discharging pipe 79 through the upper coupling pipe 73, the lower coupling pipe 72, and the center coupling pipe 74. Also, when the measured internal pressure value of each of the filter members 50 is less than the predetermined value, the backwashing valve 77 may be maintained in a closed state. In this manner, when the backwashing valve 77 is closed, only the filtering process may be performed without performing the backwashing process.

Therefore, since water including the foreign substance a is discharged to the lower coupling pipe 72 and the upper coupling pipe 73 through the openings 51 of the both sides of the filter member 50 in the backwashing process, the filtering efficiency of the filter device 1 according to the first embodiment of the present invention is further enhanced than a case where only the lower coupling pipe 72 is provided. Also, when the division member 55 is provided in the filter member 50, water flowing in from the lower inflow part 14 and water flowing in from the upper inflow part 15 may be separately filtered, and thus, the filtering efficiency is further enhanced than a case where the division member 55 is not provided. Also, the division member 55 may be installed at a position higher than that of the middle portion of the filter member 50, thereby further enhancing the filtering efficiency in consideration of an influence of gravity.

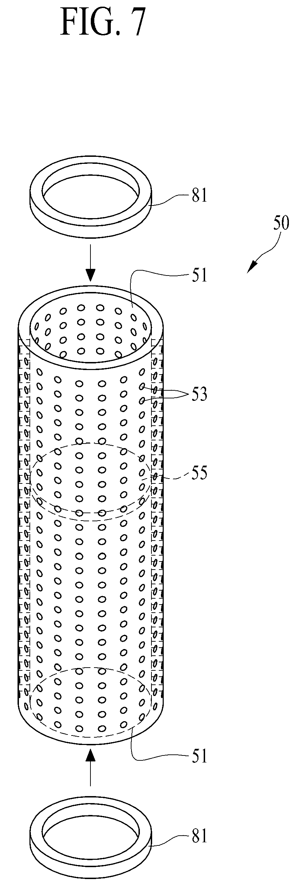

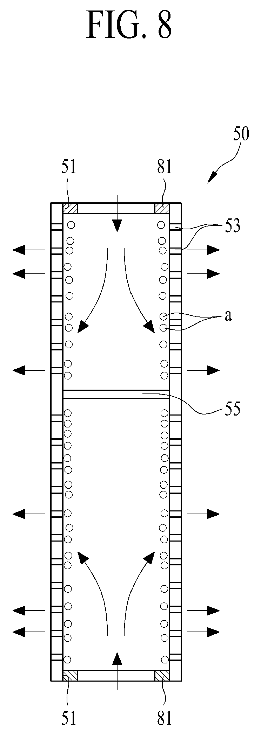

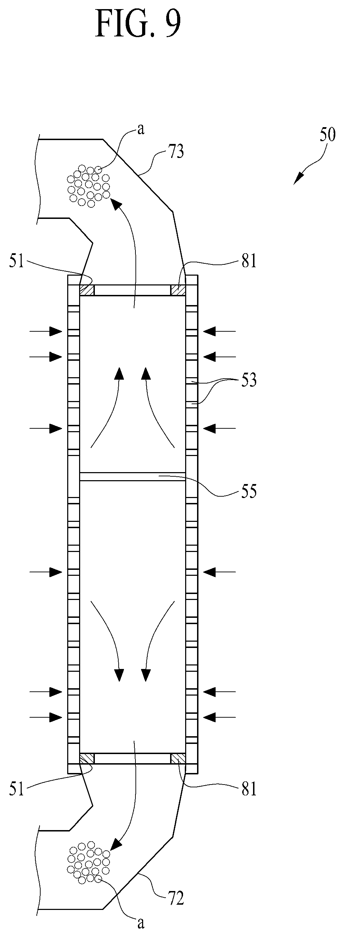

FIG. 7 is a schematic view of a filter member of a filter device according to a second embodiment of the present invention, FIG. 8 is an enlarged view illustrating a filtering process of the filter member of the filter device according to the second embodiment of the present invention, and FIG. 9 is an enlarged view illustrating a backwashing process of the filter member of the filter device according to the second embodiment of the present invention.

A filter device 1 according to the second embodiment of the present invention, as illustrated in FIGS. 7 to 9, has a difference with the filter device 1 according to the first embodiment of the present invention in that the filter member 50 of the filter device 1 according to the second embodiment further includes a flow rate control member 81 unlike the filter device 1 according to the first embodiment. Except for the flow rate control member 81, the filter device 1 according to the second embodiment is the same as the filter device 1 according to the first embodiment. Hereinafter, therefore, the flow rate control member 81 will be intensively described, and descriptions of elements which are the same as the elements according to the first embodiment are omitted.

The flow rate control member 81 may be coupled to the filter member 50 to control a discharging amount of water discharged to the backwashing unit 70 through the opening 51 of the filter member 50. The flow rate control member 81, for example, may be provided in a ring shape to be inserted into and coupled to the opening 51 of the filter member 50, for reducing the discharging amount of water discharged to the backwashing unit 70. The flow rate control member 81 may be provided in a ring shape having a tetragonal cross-sectional surface for example, but is not limited thereto. In another embodiment, the flow rate control member 81 may be provided in various shapes such as a ring shape having a circular cross-sectional surface for reducing the discharging amount of water discharged to the backwashing unit 70. The flow rate control member 81, for example, may be mounted on each of the openings 51 respectively provided in both sides of the filter member 50. However, the flow rate control valve 81 is not limited thereto. In another embodiment, the flow rate control member 81 may be mounted on the opening 51 provided in one side of the filter member 50.

A filtering process and a backwashing process of the filter device 1 according to the second embodiment of the present invention will be described with reference to FIGS. 8 and 9.

To first describe the filtering process, water which flows in through the flow rate control member 81 mounted on each of the openings 51 respectively provided in the both sides of the filter member 50 may pass through the filter hole 53 of the filter member 50 to thereby be filtered. Therefore, in the filter device 1 according to the second embodiment of the present invention, since water is supplied through the openings 51 respectively provided in the both sides of the filter member 50 in the filtering process, the filtering efficiency is enhanced like the first embodiment. Also, in the filter device 1 according to the second embodiment of the present invention, even when the division member 55 is further provided in the filter member 50, and thus, the filtering efficiency is further enhanced like the

### first embodiment.

To describe the backwashing process, when the backwashing valve is opened, the water may flow backward to the filter hole 53 of the filter member 50 coupled to the upper coupling pipe 73 and the lower coupling pipe 72 due to a pressure difference to backwash the foreign substance a. Therefore, the flow rate control member 81 may be mounted on the opening 51 of the filter member 50, and thus, the amount of discharged water is relatively reduced. That is, since the flow rate control member 81 is mounted on the opening 51 of the filter member 50, the amount of discharged water is relatively reduced, and thus, a larger amount of filtered water may be supplied to a ballast tank (not shown), thereby enhancing the filtering efficiency. Also, in the backwashing process, the filter device 1 according to the second embodiment of the present invention also provides effects, which are the same as effects obtained from the filter device 1 according to the first embodiment of the present invention, like the filtering process.

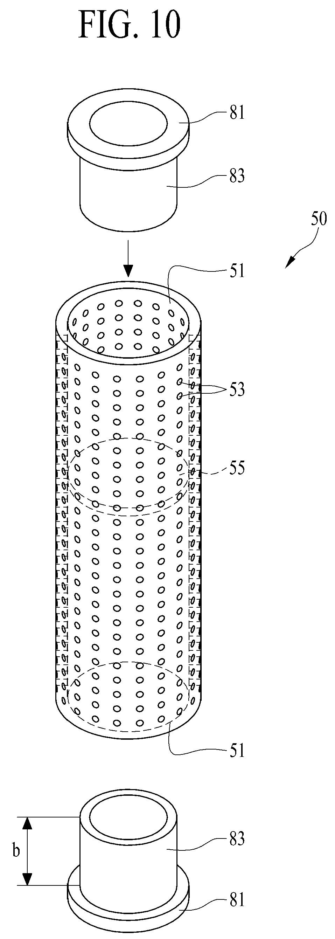

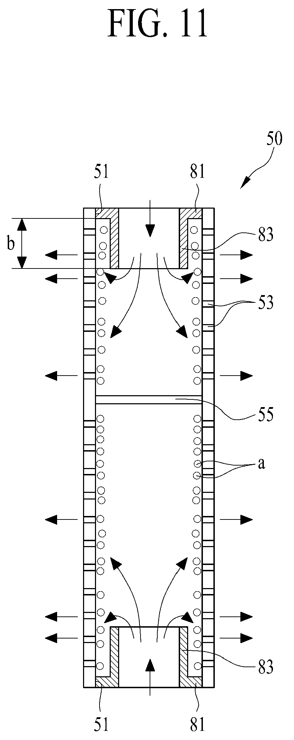

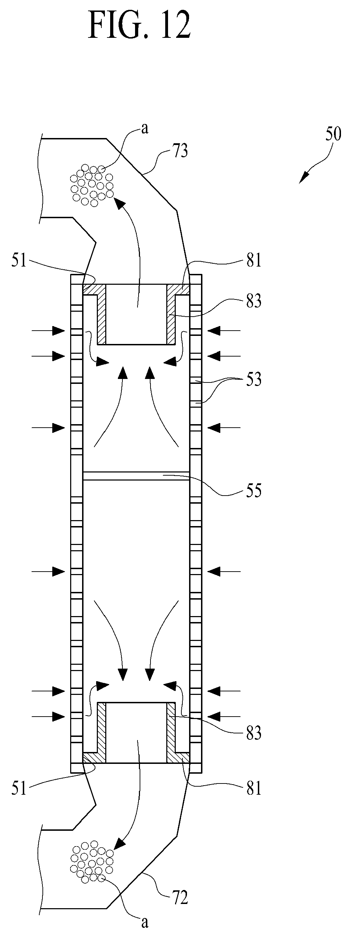

FIG. 10 is a schematic view of a filter member of a filter device according to a third embodiment of the present invention, FIG. 11 is an enlarged view illustrating a filtering process of the filter member of the filter device according to the third embodiment of the present invention, and FIG. 12 is an enlarged view illustrating a backwashing process of the filter member of the filter device according to the third embodiment of the present invention.

A filter device 1 according to the third embodiment of the present invention, as illustrated in FIGS. 10 to 12, has a difference with the filter device 1 according to the second embodiment of the present invention in that the flow rate control member 81 of the filter member 50 of the filter device 1 according to the third embodiment further includes a blocking part 83 unlike the filter device 1 according to the second embodiment. Except for the blocking part 83 included in the flow rate control member 81, the filter device 1 according to the third embodiment is the same as the filter device 1 according to the second embodiment. Hereinafter, therefore, the blocking part 83 of the flow rate control member 81 will be intensively described, and descriptions of elements which are the same as the elements according to the second embodiment are omitted.

The blocking part 83 may be provided in the flow rate control member 81 and may be provided in a pipe shape having a certain length in the filter member 50 so as to prevent water from being excessively discharged in an area adjacent to the opening 51 of the filter member 50. The blocking part 83, for example, may extend in a direction from an inner end of the flow rate control member 81 to a center of the filter member 50 to be spaced apart from an inner circumference surface of the filter member 50. The blocking part 83, for example, may be provided in each of the flow rate control members 81 respectively mounted on the openings 51 which are respectively provided in both sides of the filter member 50. However, the blocking part 83 is not limited thereto. In another embodiment, the blocking part 83 may be provided in only one side of the filter member 50. A length b of the blocking part 83 may be about one-sixth (1/6) to one-fourth (1/4) of a length of the filter member 50. However, the length b of the blocking part 83 may be provided shorter than one-sixth (1/6) or longer than one-fourth (1/4) of the length of the filter member 50 in consideration of the length of the filter member 50 or a diameter of the opening 51 and a position of the division member 55.

A filtering process and a backwashing process of the filter device 1 according to the third embodiment of the present invention will be described with reference to FIGS. 11 and 12.

To first describe the filtering process, water which flows in through the blocking part 83 of the flow rate control member 81 mounted on each of the openings 51 respectively provided in the both sides of the filter member 50 may pass through the filter hole 53 of the filter member 50 to thereby be filtered. Therefore, in the filter device 1 according to the third embodiment of the present invention, since water which is flowed in through the openings 51 respectively provided in the both sides of the filter member 50 in the filtering process is filtered in a state of being flowed into a center area of the filter member 50 by the blocking part 83, the water is prevented from excessively filtered in an area adjacent to the opening 51 of the filter member 50, thereby enhancing the filtering efficiency. Also, in the filtering process, the filter device 1 according to the third embodiment of the present invention provides effects which are the same as effects obtained from the filter device 1 according to the first and second embodiments of the present invention.

To describe the backwashing process, when the backwashing valve is opened, the water may flow backward to the filter hole 53 of the filter member 50 coupled to the upper coupling pipe 73 and the lower coupling pipe 72 due to a pressure difference to backwash the foreign substances a. Therefore, the blocking part 83 may be mounted on the opening 51 of the filter member 50, thereby preventing the foreign substances from being excessively backwashed in an area adjacent to the opening 51 of the filter member 50. That is, the foreign substances a backwashed in an area adjacent to the opening 51 of the filter member 50 may be blocked by the blocking part 83, and thus, since the foreign substances a should be discharged by going round an end of the blocking part 83, the foreign substances a are prevented from being excessively backwashed in the area adjacent to the opening 51 of the filter member 50, whereby the foreign substances a are relatively uniformly backwashed in the filter member 50 to enhance the backwashing efficiency. Also, in the backwashing process, the filter device 1 according to the third embodiment of the present invention also provides effects which are the same as effects obtained from the filter device 1 according to the first and second embodiments of the present invention.

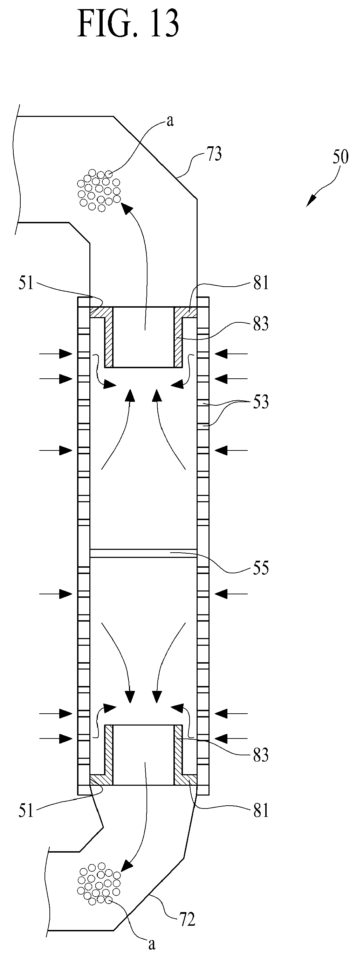

FIG. 13 is an enlarged view illustrating a backwashing process of a filter member of a filter device according to a fourth embodiment of the present invention.

A filter device 1 according to the fourth embodiment of the present invention has a difference with the filter device 1 according to the first embodiment in that the upper coupling pipe 73 is provided to have a diameter greater than that of the lower coupling pipe 72. Therefore, except that the division member 55 is disposed at a position which corresponds to a middle portion of the filter member 50 or is lower in disposed position than the middle portion of the filter member 50, the filter device 1 according to the fourth embodiment is the same as the filter device 1 according to the first embodiment. Hereinafter, therefore, a shape of the upper coupling pipe 73, a shape of the lower coupling pipe 72, and a disposed position of the division member 55 will be intensively described, and details which are the same as the details of the second embodiment are omitted.

The upper coupling pipe 73 may be provided to have a diameter which is the same as that of the filter member 50. A portion of the upper coupling pipe 73 coupled to the filter member 50 and another portion of the upper coupling pipe 73 other than the portion coupled to the filter member 50 may have a diameter which is the same as that of the filter member 50. The other portion of the upper coupling pipe 73 other than the portion coupled to the filter member 50 may have a diameter greater than that of the filter member 50.

The lower coupling pipe 72 may be provided to have a diameter less than that of the filter member 50. A portion of the lower coupling pipe 72 other than a portion coupled to the filter member 50 may have a diameter less than that of the filter member 50.

That is, the upper coupling pipe 73 may be provided to have a diameter greater than that of the lower coupling pipe 72. Therefore, the amount of water which flows in or out through an upper side of the filter member 50 and the upper coupling pipe 73 may be larger than the amount of water which flows in or out through a lower side of the filter member 50 and the lower coupling pipe 72. In this case, the division member 55 may be disposed at a position which corresponds to the middle portion of the filter member 50 or is lower in disposed position than the middle portion of the filter member 50 with respect to the vertical direction.

Therefore, the filter device 1 according to the fourth embodiment of the present invention enhances the uniformity of the amount of water flowing in or out through the filter member 50 with respect to the vertical direction, thereby enhancing the filtering efficiency and the backwashing efficiency.

Hereinabove, it has been described that when the upper coupling pipe 73 and the lower coupling pipe 72 have the same diameter, the division member 55 may be disposed at a position higher in disposed position than the middle portion of the filter member 50, and when the upper coupling pipe 73 has a diameter greater than that of the lower coupling pipe 72, the division member 55 may be disposed at a position which corresponds to the middle portion of the filter member 50 or is lower in disposed position than the middle portion of the filter member 50. However, the present embodiment is not limited thereto. In another embodiment, the division member 55 may be disposed at various positions in the filter member 50, based on a diameter difference between the upper coupling pipe 73 and the lower coupling pipe 72, a diameter of the filter member 50, and a level of pressure applied to both sides of the filter member 50.

The present invention as described above are not limited to the above-described embodiments and the accompanying drawings and those skilled in the art will clearly appreciate that various modifications, deformations, and substitutions are possible without departing from the scope and spirit of the invention.

## Claims

1. A filter device comprising:
a filter housing including an inflow port, through which water flows in, and an outflow port through which the water flowed in through the inflow port flows out;
a plurality of filter members installed in the filter housing, the plurality of filter members each having a hollow form to filter the water flowed in from the inflow port;
an inflow unit installed in the filter housing and provided in each of both sides of each of the plurality of filter members for the water, flowed in from the inflow port, to be supplied to a plurality of openings respectively provided in the both sides of each of the plurality of filter members; and
a backwashing unit coupled to both sides of at least one of the plurality of filter members for foreign substances, filtered out by the plurality of filter members, to be backwashed from the plurality of filter members.

2. The filter device of claim 1, wherein
the plurality of filter members are disposed in a vertical direction in the filter housing, and
the inflow unit comprises a lower inflow part provided under each of the plurality of filter members, an upper inflow part provided on each of the plurality of filter members, and an inflow path provided in a center area of the filter housing to communicate the lower inflow part with the upper inflow part.

3. The filter device of claim 1, wherein the backwashing unit
a coupling pipe rotatably provided to be coupled to both sides of at least one of the plurality of filter members;
a coupling pipe driver rotating the coupling pipe for the coupling pipe to be coupled to the at least one of the plurality of filter members;
a discharging pipe communicating with the coupling pipe for the foreign substances, washed from the filter member, to be discharged through the coupling pipe; and
a backwashing valve installed in the discharging pipe to open or close the discharging pipe.

4. The filter device of claim 2, wherein the backwashing unit comprises a coupling pipe rotatably provided to be coupled to both sides of at least one of the plurality of filter members, the coupling pipe including:
a lower coupling pipe provided in the lower inflow part and coupled to a lower side of a corresponding filter member;
an upper coupling pipe provided in the upper inflow part and coupled to an upper side of the corresponding filter member; and
a center coupling pipe provided in the inflow path to couple the lower coupling pipe to the upper coupling pipe.

5. The filter device of claim 1, further comprising: a division member provided in each of the plurality of filter members to divide and filter the water supplied from the inflow unit to the opening of a corresponding filter member.

6. The filter device of claim 5, wherein
each of the plurality of filter members is installed in a vertical direction in the filter housing, and
the division member is installed at a position higher in disposed position than a middle portion of each of the plurality of filter members.

7. The filter device of claim 1, further comprising: a division member provided in each of the plurality of filter members to divide and filter the water supplied from the inflow unit to the opening of a corresponding filter member,
wherein
each of the plurality of filter members is installed in a vertical direction in the filter housing,
the backwashing unit comprises a coupling pipe rotatably provided to be coupled to both sides of at least one of the plurality of filter members,
the coupling pipe comprises a lower coupling pipe, coupled to a lower side of a corresponding filter member, and an upper coupling pipe coupled to an upper side of the corresponding filter member,
the upper coupling pipe is provided to have a diameter greater than a diameter of the lower coupling pipe, and
the division member disposed at a position which corresponds to a middle portion of the corresponding filter member or is lower in disposed position than the middle portion of the corresponding filter member with respect to the vertical direction.

8. The filter device of claim 1, further comprising: a flow rate control member coupled to each of the plurality of filter members to control a discharging amount of water discharged to the backwashing unit through the openings of each of plurality of the filter members.

9. The filter device of claim 8, wherein the flow rate control member comprises a blocking part provided in the flow rate control member, the blocking part being provided in a pipe shape having a certain length in each of the plurality of filter members to prevent the water from being excessively discharged in an area adjacent to the openings of a corresponding filter member.
